# EUROPEAN PATENT SPECIFICATION

(11) **EP 3 176 515 B1**
(45) Date of publication and mention of the grant of the patent: **26.02.2020**
(21) Application number: 15197536.4
(22) Date of filing: 02.12.2015
(51) Int. Cl.: F24F 13/02, F16L 23/14, F16L 25/00

(54) **DUCT JOINT**
LEITUNGSFLANSCH
JOINT DE CONDUIT

(43) Date of publication of application: 07.06.2017
(73) Proprietor: SAINT-GOBAIN ISOVER, 92400 Courbevoie (FR)
(72) Inventor: Rodian, Rene, 2770 Kastrup (DK); Legendre, Nicolas, 69126 Heidelberg (DE); Nippa, Matthias, 67134 Birkenheide (DE); Wahls, Thorsten, 19386 Lübz (DE)
(74) Representative: Kuhnen & Wacker Patent- und Rechtsanwaltsbüro PartG mbB

(56) References cited:
- EP-A2- 0 197 466
- DE-A1- 2 221 312
- DE-A1-102013 112 175
- US-A- 4 537 430
- US-A- 5 352 000

## Description

The present invention relates to a duct joint for coupling ducts, in particular for coupling smoke extraction ducts. It also refers to a duct system of at least two connected ducts.

In case of a fire in the rooms of a building it is highly important to suck off the smoke in order to avoid danger to persons and equipment. For this, smoke extraction ducts have been provided. Such extraction ducts penetrate walls between separate rooms and are in so far constituting part of the rooms. Usual security efforts on the constructive embodiments of the general system concern the mechanical stability, in particular the ductility thereof, the integrity, in particular lack of leakage, maintenance of the room closure for preventing smoke propagation through the wall opening, and the insulation.

Another field of such ducts is the use thereof as ventilation ducts.

These ducts usually will be constituted as sheet metal ducts typically with an insulation at the outer side. In practice they are of circular shape or of rectangular cross-section, although other polygonal cross-sections are possible. The duct systems are provided of several elements connected to one another at the ends thereof. There, typically they are connected with each other via duct flanges.

For such constructions, EN 1366-8:2004 in conjunction with EN 1366-1:2014 constitute requirements for carrying out the fire resistance tests of the smoke extraction ducts. There, a border of the reduction of the cross-section is defined as these would lead to a loss of room closure with free smoke penetration from the source of fire to the neighbor room.

While a deformation of the cross-section is usually no problem in the variant with the circular design, the rectangular duct cross-sections tend to an expressive deformation under sufficient temperature admission. The ducts with rectangular cross-section thus are provided with supporting elements either inside or outside the duct. The same is true for any polygonal duct cross-section.

The supporting elements at the outside usually may be provided as L-shaped triangle and arranged spaced apart from one another. They may be fixed with screws or rivets or also welded. Most time they may be provided on all four sides and connected with each other on a projection so that a type of reinforcing collar is provided.

However, even in case of such stiffening of the duct elements, the flange connections of two adjacent duct elements provides a weak point and may lead to fail. This is in particular true for the efforts in the tests according to EN 1366-1 :2014 for smoke extraction ducts requiring a negative pressure of 500 Pa during the tests.

In one known design variant the two duct flanges will be clamped with each other by single clamps which are spaced apart from each other, overlap the two flanges and fixes them by a screw. A puncture connection is obtained in this manner.

In an alternative method used in the art both flanges at their outer side of the rectangular channel will be connected at each side by suitable shaped profiles. These profiles have a hood-shape in cross-section and overlap the two flanges. For this, they are pushed on widened parts of the flanges.

Both variants are suitable in practice. However, it is not possible to obtain endurances in fire resistance tests according to EN 1366-8:2004 in conjunction with EN 1366-1:2014 of more than 90 min or 120 min as the flange connection fails beforehand.

Documents US 4,537,430 B, EP 0 197 466 A2 and DE 2 221 312 A disclose duct joints for coupling ducts having a kind of joint slide profile, respectively.

Further, US 5,352,000 discloses a duct joint having a joint bolt clamp which overlaps the distal end portions of the duct flanges and clamping them together.

Finally, document DE 10 2013 112 175 A1 discloses a duct joint for coupling ducts having two duct flanges, each may be positioned at an end of a duct to be connected and has a generally L-shape in cross-section. It has a connecting portion for the duct and a distal end portion provided with a widened section. Further, it comprises a joining profile connecting the two duct flanges at the widened sections thereof by encompassing and clamping them. In addition, it has a joint bolt clamp overlapping the distal end portions of the duct flanges and the joining profile provided thereon, and clamping the two duct flanges together. The joint bolt clamp and the joining profile are fixed with each other e.g. by spot welding. The present invention starts from this piece of art.

It is therefore an object of the present invention to provide an improved duct joint for coupling ducts of any polygonal but in particular rectangular cross-section which allows to obtain an endurance in fire resistance tests of 120 min according to EN 1366-8:2004 in connection with EN 1366-1:2014. It is also an object of the invention to provide such improved duct system.

This object will be solved by a duct joint with the features of claim 1.

The present invention is based on the insight that a better fire resistance for a duct system is available if both, an extended contact and a punctual contact, are given. Despite of the fact that an additional expenditure is needed therefor, it is therefore proposed to combine the joint slide profile with the at least one joint bolt clamp.

In particular, the present invention thus combines the advantages of each of this connection variants. The extended contact provided by the joint slide profile allows to obtain a favorable impermeability, however, with insufficient mechanical strength. The puncture connection between the two flanges according to the at least one joint bolt clamp, in contrast, provides a good mechanical strength to the connection at the flanges. However, the connection is only punctual so that it may leave leakage openings.

With the present invention, however, the advantages thereof are combined and an improved duct joint is provided. It is the specific combination of these two different connection variants which allows to obtain a structure having an endurance in the fire resistance tests of 120 min.

Advantageous embodiments of the duct joint of present invention are subject matter of dependent claims to 2 to 6.

It is possible that the at least one joint bolt clamp of the inventive duct joint acts directly on the duct flanges. This allows to obtain an improved mechanical strength of the connection as the force is directly transmitted to the parts involved.

Moreover, a projection part may be arranged at each duct flange which acts as a stopper against the tensioning of the at least one joint bolt clamp. This allows to prevent the flanges from being deformed. Further, the forces applied to the flanges will be guided so that the connection is improved.

In a further embodiment, a sealing member will be provided between the two flanges. This will enhance the tightness of the connection and thus improve the duct joint further.

The sealing member may be an inorganic-based adhesive tape. It has been shown in the practice that such tape is very favorable in order to improve impermeability of the joint. Moreover, as it is inorganic-based, it exhibits a good fire resistance.

In case that the connection portion of the duct flange is welded to the end of a respective duct, it is easy to install and fix the flanges at the ducts.

According to a further aspect of the present invention, a duct system of at least two connected ducts, in particular smoke extraction ducts, in accordance with claim 7 is provided. It comprises the at least two ducts of polygonal cross-section, in particular rectangular, cross-section and at least four duct joints of the present invention. With this duct system, the advantages acknowledged before would be obtained, too.

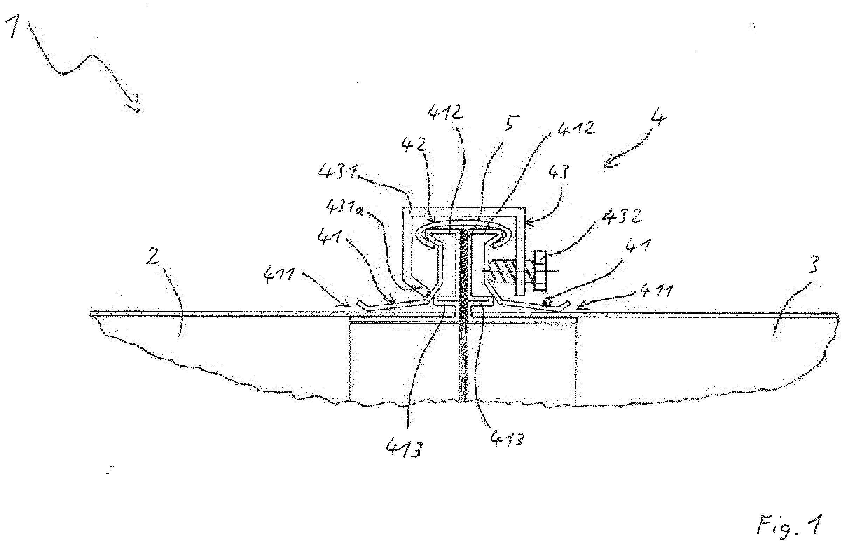

The present invention now will be explained in more detail with regard to the only one figure of the drawing. Fig. 1 shows a cross-section through a duct joint according to the present invention.

According to the presentation in Fig. 1, a duct system 1 comprises two ducts 2 and 3 as well as a duct joint 4. It further has a sealing member 5 in the duct joint 4. It is clear from the drawing that only one side of the duct system 1 is shown in the figure; the ducts 2 or 3 are of polygonal, i.e. rectangular cross-section and the other three sides thereof are connected in the same manner.

The duct joint 4 includes two flanges 41 which are of the same structure, but provided mirror-inverted in the structure. The sealing member 5 is inserted between the two flanges 41. A joint slide profile 42 is provided to combine the two flanges 41. A joint bolt clamp 43 is arranged to overlap these parts and to strengthen the connection.

The flange 41 is in essential of L-shape and has a connecting portion 411 for the ducts 2 or 3. The ducts 2 or 3 are in a sliding and clamping connection with the connecting portion 411 and fixed thereto by welding. The flange 41 further has a distal end portion 412 at the end thereof spaced apart from the ducts 2 or 3. The distal end portion 412 provides a widened section as shown in the drawing. The flange 41 further has a projection part 413 in the area close to the ducts 2 or 3.

In the present embodiment, the flange 41 is formed from a metal strip and bent to the shape as presented in the figure. The connecting portion 411 is built by the end portions thereof and allows to accommodate an end of the duct 2 or 3 by clamping it there between. In the present embodiment, spot-welding is used to fix the flange 41 to the duct 2 or 3 at the outer one of the end portions of the flange 41.

The projection part 413 is adapted to act as a stopper against the tensioning of the at least one joint bolt clamp 43 as will be explained in more detail later.

The widened section at the distal end portion 412 of each flange 41 cooperates with the joint slide profile 42 in order to connect them. The joint slide profile 42 overlaps the distal end portions 412 of the flanges 41 and provides a form-fit as it grips behind the widened section. It will be mounted to the distal end portions 412 by sliding connection from the side.

The joint bolt clamp 43 is comprised of an essential U-shaped body 431 with an inclined end portion 431a and a screw 432. The U-shaped body 431 overlaps the distal end portions 412 and the joint slide profile 42. On the one side, it abuts at a flange 41 with the inclined end portion 431a, and at the other side, by the screw 432.

The inclined end portion 431a cooperates in addition with the projection part 413 within the flange 41 which acts as a stopper. The screw 432 is accommodated in a screw thread in the U-shaped body 431, which however, is not shown in the figure. It serves for tensioning of the two flanges 41 with each other and acts on the wall of the other flange 41. It also interacts with the projection part 413 of that flange 41 which acts as a stopper.

The sealing member 5 is provided as an inorganic-based adhesive tape and enhances tightness of the system.

Apart from the shown embodiment, the present invention also includes further design variants.

It is not necessary that the at least one joint bolt clamp 43 acts directly on the duct flanges 41. It may interact with a part of the joint slide profile 42 or via another portion between the screw 432 and the flange 41.

Also, more than one joint bolt clamp 43 may be provided on each side of the rectangular ducts depending on the dimensions of the ducts. For example, a distance between 20 cm and 30 cm from one joint bolt clamp to the other one may be suitable.

Sometimes it is not necessary to provide the projection parts 413 at the flanges 41 so that they may be omitted.

In addition, the sealing member 5 may be omitted, too. On the other hand, in case the sealing member 5 is given, it also may be provided as any other suitable inorganic layer.

The ducts 2 or 3 may be connected to the duct joint 4 in a different manner as by welding. For example, screws, rivets or the like may be used instead or in addition to the welding for fixing them. Also, the sliding or clamping connection is suitable to attach the flanges 41 thereon.

## Claims

1. Duct joint (4) for coupling ducts (2, 3), in particular for coupling smoke extraction ducts, comprising
two duct flanges (41), each may be positioned at an end of a duct (2, 3) to be connected and has a generally L-shape in cross-section, with a connecting portion (411) for the duct (2, 3) and a distal end portion (412) provided with a widened section,
a joint slide profile (42) connecting the two duct flanges (41) at the widened sections thereof, and
at least one joint bolt clamp (43), overlapping the distal end portions (412) of the duct flanges (41) and the joint slide profile (42) provided thereon, and clamping the two duct flanges (41) together,
**characterized in that**
the joint slide profile (42) connects the two duct flanges (41) by form-fit with overlapping the distal end portions (412) of the duct flanges (41) as it grips behind the widened sections, wherein it is mounted to the distal end portions (412) by sliding connection from a side.

2. Duct joint of claim 1, **characterized in that** the at least one joint bolt clamp (43) acts directly on the duct flanges (41).

3. Duct joint of claim 1 or 2, **characterized in that** a projection part (413) is arranged at each duct flange (41) which acts as a stopper against tensioning of the at least one joint bolt clamp (43).

4. Duct joint according to one of claims 1 to 3, **characterized in that** a sealing member (5) is provided between the two duct flanges (41).

5. Duct joint of claim 4, **characterized in that** the sealing member (5) is an inorganic-based adhesive tape.

6. Duct joint according to one of claims 1 to 5, **characterized in that** the connection portion (411) of the duct flange (41) is welded to the end of a respective duct (2, 3).

7. Duct system (1) of at least two connected ducts (2, 3), in particular smoke extraction ducts, comprising the at least two ducts (2, 3) of polygonal, in particular rectangular, cross-section and at least four duct joints (4) according to one of claims 1 to 6.

## Patentansprüche

1. Kanalverbindung (4) zum Verbinden von Kanälen (2, 3), besonders zum Verbinden von Rauchgasabzugskanälen, aufweisend:
zwei Kanalflansche (41), von denen jeder an einem Ende eines Kanals (2, 3) positioniert sein kann, um verbunden zu werden, und im Wesentlichen eine L-Form im Querschnitt aufweist, mit einem Verbindungsabschnitt (411) für den Kanal (2, 3) und einem distalen Endabschnitt (412), der über einen verbreiterten Abschnitt verfügt,
ein Verbindungsgleitprofil (42), das die zwei Kanalflansche (41) an den verbreiterten Abschnitten derselben verbindet, und
zumindest eine Verbindungsschraubenschelle (43), die die distalen Endabschnitte (412) der Kanalflansche (41) und die Verbindungsgleitprofile (42), die sich darauf befinden, überlappt, und die zwei Kanalflansche (41) zusammenklemmt,
**dadurch gekennzeichnet, dass**
das Verbindungsgleitprofil (42) die zwei Kanalflansche (41) durch Formschluss verbindet, wobei sich die distalen Endabschnitte (412) der Kanalflansche (41) überlappen, während es hinter den verbreiterten Abschnitten greift, wobei es durch eine Gleitverbindung von einer Seite an den distalen Endabschnitten (412) montiert ist.

2. Kanalverbindung nach Anspruch 1, **dadurch gekennzeichnet, dass** die zumindest eine Verbindungsschraubenschelle (43) direkt auf die Kanalflansche (41) wirkt.

3. Kanalverbindung nach Anspruch 1 oder 2, **dadurch gekennzeichnet, dass** ein hervorstehender Teil (413) an jedem Kanalflansch (41) angeordnet ist, der als ein Stopper gegen das Anziehen der zumindest einen Verbindungsschraubenklemme (43) wirkt.

4. Kanalverbindung nach einem der Ansprüche 1 bis 3, **dadurch gekennzeichnet, dass** ein Dichtungselement (5) zwischen den beiden Kanalflanschen (41) vorhanden ist.

5. Kanalverbindung nach Anspruch 4, **dadurch gekennzeichnet, dass** das Dichtungselement (5) ein Klebeband auf anorganischer Basis ist.

6. Kanalverbindung nach einem der Ansprüche 1 bis 5, **dadurch gekennzeichnet, dass** der Verbindungsabschnitt (411) des Kanalflansches (41) an das Ende eines entsprechenden Kanals (2, 3) geschweißt ist.

7. Kanalsystem (1) mit zumindest zwei verbundenen Kanälen (2, 3), besonders Rauchgasabzugskanälen, aufweisend die zumindest zwei Kanäle (2, 3) mit einem polygonalen, besonders rechtwinkligen Querschnitt, und zumindest vier Kanalverbindungen (4) nach einem der Ansprüche 1 bis 6.

## Revendications

1. Joint de conduit (4) pour le couplage de conduits (2, 3), en particulier pour le couplage de conduits d'extraction de fumées, comprenant
deux brides de conduit (41), chacune peut être positionnée au niveau d'une extrémité d'un conduit (2, 3) à raccorder et présente une forme généralement en L en section transversale, avec une portion de raccordement (411) pour le conduit (2, 3) et une portion d'extrémité distale (412) dotée d'une section élargie,
un profil coulissant de joint (42) raccordant les deux brides de conduit (41) au niveau des sections élargies de celles-ci, et
au moins une pince de boulon de joint (43), recouvrant les portions d'extrémité distale (412) des brides de conduit (41) et le profil coulissant de joint (42) pourvu sur celles-ci, et serrant les deux brides de conduit (41) ensemble,
**caractérisé en ce que**
le profil coulissant de joint (42) raccorde les deux brides de conduit (41) par complémentarité de formes avec le recouvrement des portions d'extrémité distale (412) des brides de conduit (41) lorsqu'il saisit par l'arrière les sections élargies, dans lequel il est monté sur les portions d'extrémité distale (412) par raccordement coulissant d'un côté.

2. Joint de conduit selon la revendication 1, **caractérisé en ce que** l'au moins une pince de boulon de joint (43) agit directement sur les brides de conduit (41).

3. Joint de conduit selon la revendication 1 ou 2, **caractérisé en ce qu'**une partie de projection (413) est agencée au niveau de chaque bride de conduit (41) qui agit comme une butée contre la mise sous tension de l'au moins une pince de boulon de joint (43).

4. Joint de conduit selon l'une des revendications 1 à 3, **caractérisé en ce qu'**un élément étanche (5) est pourvu entre les deux brides de conduit (41).

5. Joint de conduit selon la revendication 4, **caractérisé en ce que** l'élément étanche (5) est un ruban adhésif à base inorganique.

6. Joint de conduit selon l'une des revendications 1 à 5, **caractérisé en ce que** la portion de raccordement (411) de la bride de conduit (41) est soudée à l'extrémité d'un conduit respectif (2, 3).

7. Système de conduit (1) d'au moins deux conduits raccordés (2, 3), en particulier de conduits d'extraction de fumées, comprenant les au moins deux conduits (2, 3) de section transversale polygonale, en particulier rectangulaire, et au moins quatre joints de conduit (4) selon l'une des revendications 1 à 6.
